# EUROPÄISCHE PATENTSCHRIFT

(11) **EP 1 544 081 B1**
(45) Veröffentlichungstag und Bekanntmachung des Hinweises auf die Patenterteilung: **24.12.2008**
(21) Anmeldenummer: 04025707.3
(22) Anmeldetag: 29.10.2004
(51) Int. Cl.: B62D 21/15

(54) **Deformationselement für ein Kraftfahrzeug**
Deformation element for a motor vehicle
Elément déformable pour un véhicule

(30) Priorität: 20.12.2003 DE 10360170
(43) Veröffentlichungstag der Anmeldung: 22.06.2005
(73) Patentinhaber: Dr. Ing. h.c. F. Porsche Aktiengesellschaft, 70435 Stuttgart (DE)
(72) Erfinder: Herntier, Matthias, 75449 Wurmberg (DE); Oggianu, Roberto, 71229 Leonberg (DE); Posch, Tobias, 75173 Pforzheim (DE); Sautter, Frank, 72770 Reutlingen (DE); Eppele, Jochen, 76661 Philippsburg (DE); Brausse, Stephan, 72800 Eningen (DE)

(56) Entgegenhaltungen:
- EP-A- 1 454 815
- DE-A1- 2 357 419
- DE-U1- 20 313 810

## Beschreibung

Die Erfindung bezieht sich auf ein Deformationselement für ein Kraftfahrzeug nach dem Oberbegriff des Anspruchs 1.

Aus der DE 100 62 689 A1 ist ein Deformationselement für ein Kraftfahrzeug bekannt, das ein Rohrteil mit rundem Querschnitt umfasst, in dem Verstärkungsstreben und Stege in Längs- und Querrichtung vorgesehen sind. Des Weiteren ist aus der DE 197 33 191 A1 ein Querträger für ein Fahrzeug bekannt, der in Quer- und Längsrichtung verlaufende Hohlkammern aufweist, die mittels Stege unterteilt sind.

Ein gattungsgemäßes Deformationselement für Kraftfahrzeuge ist aus der DE 20313810 U1 bekannt.

Die Aufgabe der Erfindung besteht darin, ein Deformationselement im Vorder- oder Hinterwagen eines Kraftfahrzeugs zu schaffen, das bei einem Crash energieabsorbierend wirkt.

Diese Aufgabe wird erfindungsgemäß durch die Merkmale des Patentanspruchs 1 gelöst. Weitere vorteilhafte Merkmale beinhalten die Unteransprüche.

Die mit der Erfindung erzielten Vorteile bestehen darin, dass durch ein sogenanntes Einlegeteil aus Profilträgern in die Kofferraummulde eines Fahrzeugs bei einem Crash Energie aufgenommen wird, indem die Profilträger sich verformen können. Insbesondere ist nach der Erfindung vorgesehen, dass das Deformationselement aus einem zusammenhängenden dreieckförmigen Bauteil mit einem quer zum Fahrzeug ausgerichteten - in Fahrtrichtung des Fahrzeugs F gesehen - vornliegenden Profilträger besteht, an dem sich - in Bezug auf die Fahrtrichtung des Fahrzeugs nach hinten verlaufende weitere Profilträger anschließen, deren freie hintere Enden über eine querverlaufende Stützplatte miteinander verbunden sind, die sich am Fahrzeugaufbau abstützt.

Hierdurch wird nach der Erfindung in vorteilhafter Weise erreicht, dass mittels des vorliegenden Profilträgers und der schräg im Fahrzeug verlaufenden weiteren Profilträger bei einem Crash durch Stauchung dieser Profilträger Energie absorbiert wird. Eine Abstützung dieser aus Profilträgern bestehenden Baueinheit bzw. an dem Einlegeteil erfolgt an einer im Fahrzeug querverlaufenden Fahrzeugaufbauwand bzw. einem Fahrzeugprofil.

Die Verbindung der Profilträger untereinander erfolgt derart, dass an den Stirnenden des vornliegenden Profilträgers jeweils ein schräg nach hinten verlaufender Profilträger befestigt wird, wobei eine innere Wandfläche des Profilträgers am Stirnende des vornliegenden Profilträgers anliegend ist und die vorderen Stirnenden der weiteren Profilträger freiliegend sind. Der vordere Profilträger weist mindestens zwei in Profilträger-Längsrichtung verlaufende und über eine innere Stegwand abgeteilte Hohlkammern auf, die im Querschnitt viereckförmig ausgeführt sind. Die schräg nach hinten verlaufenden Profilträger weisen jeweils mindestens drei über zwei innere Stegwände abgetrennte in Profilträger-Längsrichtung verlaufende Hohlkammern auf, die im Querschnitt viereckförmig ausgeführt sind. Durch diese Anordnung der einzelnen Profilträger in der Kofferraummulde wird der Crash einerseits im mittleren Bereich des Fahrzeugs von dem im Fahrzeug querverlaufend angeordneten Profilträger aufgenommen und von der Seite her bzw. von den Außenseiten her wird der Crash von den Profilträgern jeweils von vorn, das heißt, in etwa von der Stirnseite her aufgenommen.

Die angeordneten Profilträger verlaufen vom vorderen querverlaufenden Profilträger nach hinten - in Fahrtrichtung des Fahrzeugs gesehen - zusammen und bilden zwischen sich und dem vorderen Profilträger einen dreieckförmigen Leerraum. Hierdurch wird ein Zusammenstauchen der Profilträger bei einem Crash nicht behindert.

Damit eine gesicherte Abstützung des Deformationselements zum Fahrzeugaufbau hin erfolgen kann, weist die abschließende Stützplatte ein aus der Plattenebene vorragendes Stützprofil auf, das in einer Einformung einer Querwand oder eines querverlaufenden Aufbauprofils der Fahrzeugaufbaustruktur abstützend eingebettet ist. Das Stützprofil der Stützplatte ist in einer quergerichteten Wand oder einem Profil des Fahrzeugaufbaus so eingebettet, dass hinter der Wand oder dem Profil noch ein Freiraum besteht, so dass bei einem Crash die Deformation durch das Profil nicht behindert wird.

Eine Befestigung des Deformationselements mit dem Fahrzeugaufbau erfolgt über sogenannte Abstellungen an den Profilträgern, welche über Schraubmittel am Boden der Kofferraummulde befestigbar sind.

Damit eine raumsparende Anordnung des Deformationselements in der Kofferraummulde und eine optimale Crashaufnahme u.a. durch eine genaue Anpassung an den Boden der Kofferraummulde erfolgen kann, ist nach der Erfindung vorgesehen, dass die Unterfläche der Profilträger der Auflagefläche der Kofferraummulde in der Fahrzeugaufbaustruktur in etwa angepasst ist, derart, dass ein vorderer unterer Bereich der Profilträger eine angeschrägte und anschließend ausgerundete Auflagefläche aufweist, die in einer Stirnkante einer ebenen Oberfläche der Profilträger ausläuft.

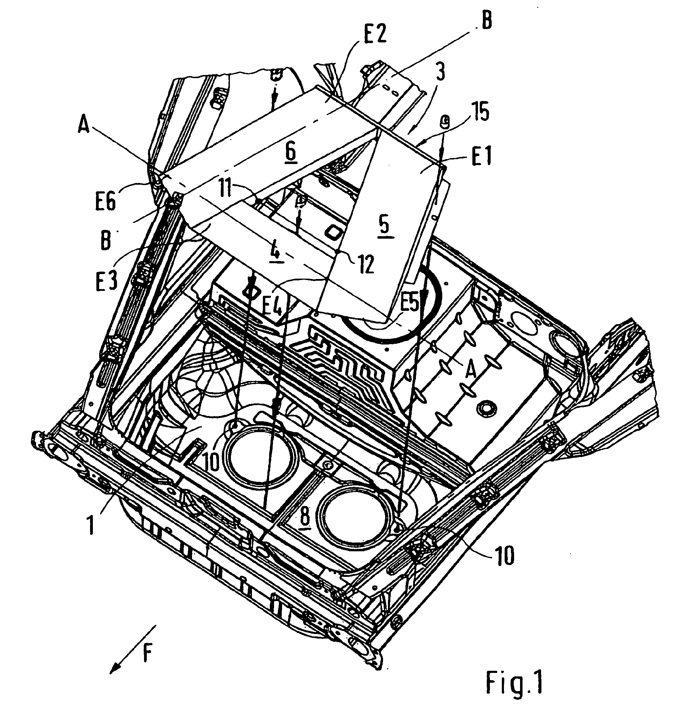

Ein Ausführungsbeispiel der Erfindung ist in den Zeichnungen dargestellt und wird im Folgenden näher beschrieben.
Es zeigen
- Fig. 1: eine schaubildliche Darstellung auf eine Kofferraummulde in einem Vorderwagen eines Kraftfahrzeugs mit in Explosionsdarstellung gezeigtem Deformationselement,

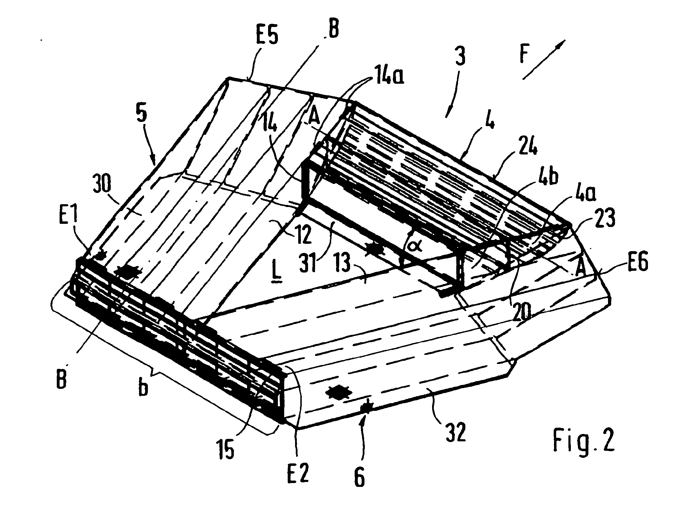

- Fig. 2: eine schaubildliche Darstellung auf das Deformationselement,

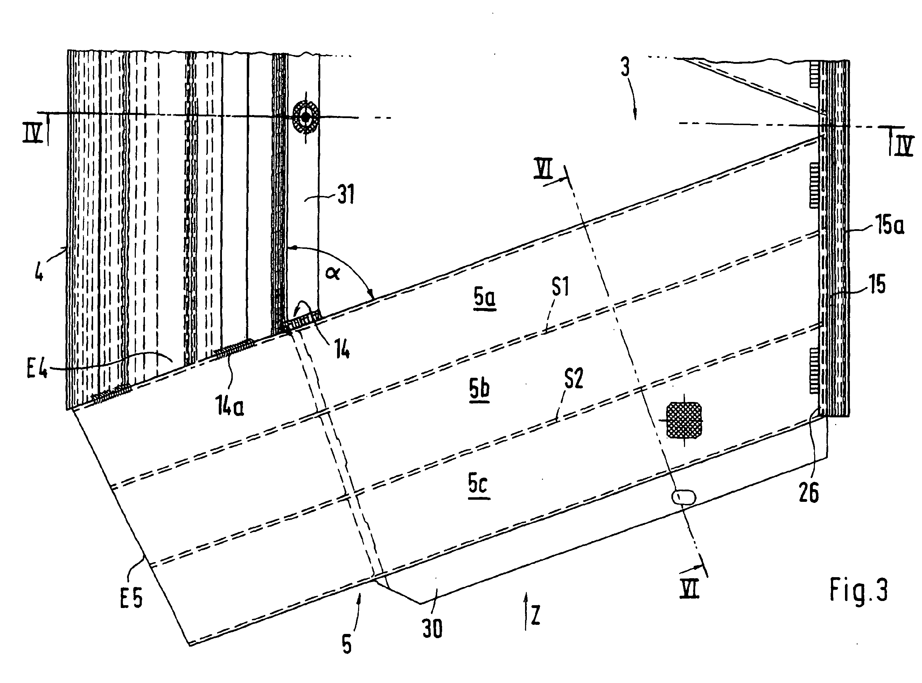

- Fig. 3: eine Draufsicht auf ein teilweise dargestelltes Deformationselement,
- Fig. 4: einen Schnitt nach der Linie IV-IV der Fig. 3,

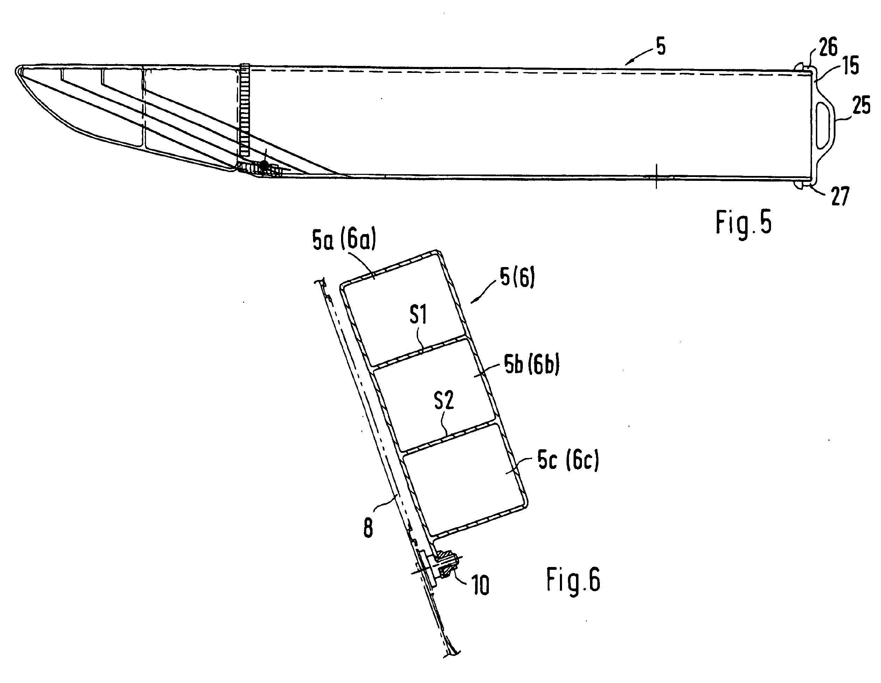

- Fig. 5: eine Seitenansicht des Deformationselements in Pfeilrichtung Z gesehen,
- Fig. 6: einen Schnitt nach der Linie VI-VI der Fig. 3.

In einer Kofferraummulde 1 eines Kraftfahrzeugs, von dem nur ein Vorderwagen gezeigt ist, ist ein Deformationselement 3 angeordnet, das aus mindestens drei zusammengesetzten Profilträgern 4, 5 und 6 besteht, die eine Baueinheit bilden. Diese ist mit dem Boden 8 der Kofferraummulde 1 über Schraubmittel 10 verbunden.

Das Deformationselment 3 besteht aus einem quer zum Fahrzeug ausgerichteten - in Fahrtrichtung F des Fahrzeugs gesehen - vornliegenden Profilträger 4, an dem sich zwei weitere Profilträger 5 und 6 anschließen, die sich in Fahrzeuglängsrichtung erstrecken. Diese Profilträger 5 und 6 können schräg oder in anderer Weise ausgerichtet sein.

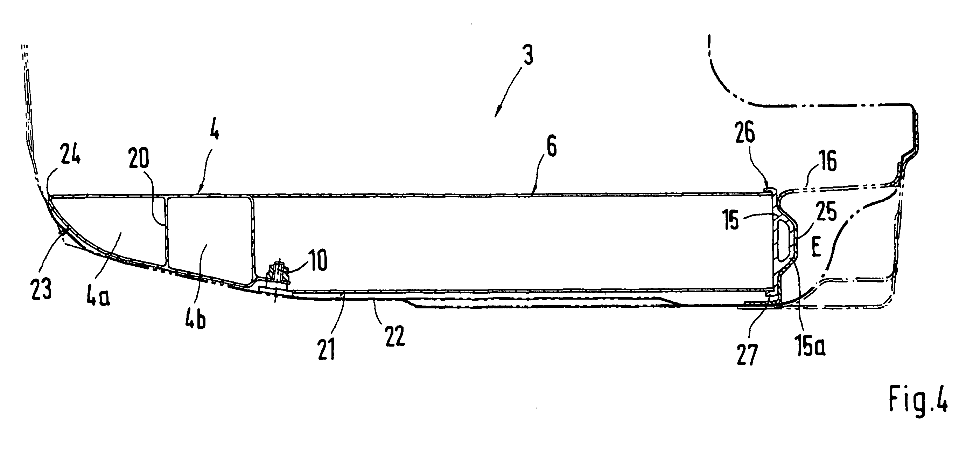

Die schräg ausgerichteten Profilträger 5 und 6 schließen den quer ausgerichteten Profilträger 4 vorderseitig zwischen sich ein derart, dass die inneren Seitenflächen 11, 12 der Profilträger 5, 6 mit den Stirnkanten E3, E4 des Profilträgers 4 durch Schweißungen 14, 14a miteinander verbunden sind. Die freien dem Profilträger 4 abgekehrten Enden E1, E2 der weiteren Profilträger 5, 6 sind über eine Stützplatte 15 fest miteinander verbunden, die sich an einem querverlaufenden Profil 16 oder einer Wand des Fahrzeugaufbaus abstützt, was in Fig. 4 näher gezeigt ist.

Die Profilträger 4, 5 und 6 bestehen aus Aluminiumstrangpressprofilen und weisen Hohlkammern auf, die durch Stegwände voneinander getrennt sind. So weist der quer im Fahrzeug ausgerichtete Profilträger 4 in Profilträger-Längsrichtung A-A verlaufende Hohlkammern 4a und 4b auf, die über eine innere Stegwand 20 getrennt sind. Die weiteren schräg angeordneten, das heißt unter einem Winkel α zum Profilträger 4 angestellten weiteren Profilträger 5 und 6 weisen in Profilträger-Längsrichtung B-B verlaufende Hohlkammern 5a, 5b und 5c bzw. 6a, 6b und 6c auf, die über innere Stegwände S1, S2 zueinander abgetrennt sind.

Die Profilträger 4, 5 und 6 sind in der Weise miteinander zu einer Baueinheit verbunden, dass sich insgesamt eine Unterfläche 21 aller Profilträger 4, 5 und 6 ergibt, die der Auflagefläche 22 der Kofferraummulde 8 in etwa angepasst ist. Hierdurch weist der quer angeordnete Profilträger 4 eine leicht ausgerundete Unterfläche 23 auf, die sich in einer vorderen Stirnkante 24 der Hohlkammer 4a endet.

Die schräg angeordneten Profilträger 5 und 6 verlaufen von dem quer im Fahrzeug ausgerichteten vorderen Profilträger 4 nach hinten - in Bezug auf die Fahrtrichtung des Fahrzeugs gesehen - zusammen und bilden zwischen sich mit dem Profilträger 4 einen dreieckförmigen Leeraum L.

Eine Abstützung der Baueinheit bestehend aus den drei Profilträgern 4, 5 und 6 erfolgt am Fahrzeugaufbau am Querprofil 16 bzw. an einer Aufbauwand. Hierzu sind die freien Enden E1 und E2 der Profilträger 5 und 6 mit der Stützplatte 15 fest verbunden, die sich über die gesamte Breite b der Profilträger 5 und 6 erstreckt. Eine Verbindung der Stützplatte 15 mit den Profilträgern 5, 6 erfolgt über Schweißungen, wobei die freien Enden E1 und E2 der Profilträger 5, 6 von Schenkeln 26, 27 der Stützplatte 15 übergriffen werden, was in Fig. 4 näher gezeigt ist.

Zur Abstützung am Querprofil 16 weist die Stützplatte 15 ein positionierendes sogenanntes vorstehendes Stützprofil 15a auf, das in einer eingelassenen Aufnahme 25 des Querprofils 16 oder einer Aufbauwand eingebettet angeordnet ist. Hinter der Aufnahme 25 ist ein Freiraum vorgesehen.

Bei einem Frontcrash des Fahrzeugs werden sich die Profilträger 4, 5 und 6 unter Absorption von Energie zusammenfalten, wobei die Profilträger 4, 5 und 6 aufgrund des Leeraumes nicht auf Block gehen können.

## Patentansprüche

1. Deformationselement für ein Kraftfahrzeug, das in einer Kofferraummulde einer Aufbaustruktur des Fahrzeugs im Vorder- oder Hinterwagen angeordnet ist, **dadurch gekennzeichnet, dass** das Deformationselement (3) aus einem dreieckförmigen zusammenhängenden Bauteil mit einem quer zum Fahrzeug ausgerichteten - in Fahrtrichtung (F) des Fahrzeugs gesehen - vorderen Profilträger (4) besteht, an dem sich - in Bezug auf die Fahrtrichtung (F) des Fahrzeugs - nach hinten verlaufende weitere Profilträger (5, 6) anschließen, deren freie hintere Enden (E1, E2) über eine querverlaufende Stützplatte (15) miteinander verbunden sind, welche sich an der Aufbaustruktur abstützt.

2. Deformationselement nach Anspruch 1, **dadurch gekennzeichnet, dass** an den Stirnenden (E3, E4) des vorderen Profilträgers (4) jeweils ein schräg nach hinten verlaufender Profilträger (5, 6) befestigt ist, und eine innere Wandfläche (12, 13) des Profilträgers (5, 6) am Stirnende (E3, E4) des Profilträgers (4) anliegend ist und die vorderen Stirnenden (E5, E6) der Profilträger (5, 6) freiliegend sind.

3. Deformationselement nach den Ansprüchen 1 oder 2, **dadurch gekennzeichnet, dass** der vordere Profilträger (4) mindestens zwei in Profilträger-Längsrichtung (A-A) verlaufende und über eine innere Stegwand (20) abgeteilte Hohlkammern (4a, 4b) aufweist, die im Querschnitt viereckförmig ausgeführt sind.

4. Deformationselement nach den Ansprüchen 1 oder 2, **dadurch gekennzeichnet, dass** die schräg nach hinten verlaufenden Profilträger (5, 6) jeweils mindestens drei über zwei innere Stegwände (S1) und (S2) abgetrennte in Profilträger-Längsrichtung (B-B) verlaufende Hohlkammern (5a, 5b, 5c) bzw. (6a, 6b, 6c) aufweisen, die im Querschnitt viereckförmig ausgeführt sind.

5. Deformationselement nach den Ansprüchen 1, 2, 3 oder 4, **dadurch gekennzeichnet, dass** die abschließend Stützplatte (15) ein aus der Plattenebene vorragendes Stützprofil (15a) umfasst, das in einer Einformung (25) einer Querwand oder eines Querprofils (16) der Fahrzeugaufbaustruktur abstützend eingebettet ist.

6. Deformationselement nach einem der vorhergehenden Ansprüche, **dadurch gekennzeichnet, dass** die abschließend Stützplatte (15) die Stirnseiten der Profilträger (5, 6) mittels Schenkel (26, 27) übergreift.

7. Deformationselement nach einem der vorhergehenden Ansprüche, **dadurch gekennzeichnet, dass** die Profilträger (4, 5 und 6) des Deformationselements (3) an mindestens einer Seite Abstellungen (30, 31, 32) zur Befestigung über Schraubmittel (10) am Boden der Kofferraummulde (8) der Fahrzeugaufbaustruktur aufweisen.

8. Deformationselement nach einem der vorhergehenden Ansprüche, **dadurch gekennzeichnet, dass** eine von allen Profilträgern (4, 5, 6) gebildete Unterfläche (21) der Auflagefläche (22) der Kofferraummulde (8) derart angepasst ist, dass ein vorderer unterer Bereich des Profilträgers (4) eine angeschrägte und daran anschließend ausgerundete Auflagefläche (23) aufweist, die in einer vorderen Stirnkante (24) des Profilträgers (4) ausläuft.

9. Deformationselement nach einem der vorhergehenden Ansprüche, **dadurch gekennzeichnet, dass** die beiden Profilträger (5, 6) vom vorderen querverlaufenden Profilträger (4) nach hinten - in Fahrtrichtung (F) des Fahrzeugs gesehen - zusammenlaufen und zwischen sich mit dem vorderen Profilträger (4) unter Bildung eines Winkels (α) angestellt sind und einen dreieckförmigen Leeraum (L) bilden.

## Claims

1. Deformation element for a motor vehicle, the deformation element being arranged in a luggage compartment trough in the front or rear end of a vehicle body structure, **characterized in that** the deformation element (3) comprises a triangular interconnected component with a front profile support (4) - as seen in the direction of travel (F) of the vehicle - which is oriented transversely with respect to the vehicle and is adjoined by further profile supports (5, 6) which run rearwards - with regard to the direction of travel (F) of the vehicle - and the free rear ends (E1, E2) of which are connected to each other via a transversely running support plate (15) which is supported on the body structure.

2. Deformation element according to Claim 1, **characterized in that** a respective profile support (5, 6) running obliquely to the rear is fastened to the end faces (E3, E4) of the front profile support (4), and an inner wall surface (12, 13) of the profile support (5, 6) butts against the end face (E3, E4) of the profile support (4), and the front end faces (E5, E6) of the profile supports (5, 6) are exposed.

3. Deformation element according to Claim 1 or 2, **characterized in that** the front profile support (4) has at least two hollow chambers (4a, 4b) which run in the longitudinal direction (A-A) of the profile support, are divided by an inner web wall (20) and are of tetragonal design in cross section.

4. Deformation element according to Claim 1 or 2, **characterized in that** the profile supports (5, 6) respectively have at least three hollow chambers (5a, 5b, 5c) and (6a, 6b, 6c) which are separated by two inner web walls (S1) and (S2) run in the longitudinal direction (B-B) of the profile support and are of tetragonal design in cross section.

5. Deformation element according to Claims 1, 2, 3 or 4, **characterized in that** the terminating support plate (15) comprises a support profile (15a) which projects out of the plane of the support plate and is embedded in a supporting manner in a recess (25) of a transverse wall or of a transverse profile (16) of the vehicle body structure.

6. Deformation element according to one of the preceding claims, **characterized in that** the terminating support plate (15) engages by means of limbs (26, 27) over the end sides of the profile supports (5, 6).

7. Deformation element according to one of the preceding claims, **characterized in that** the profile supports (4, 5 and 6) of the deformation element (3) have bent portions (30, 31, 32) on at least one side for fastening to the floor of the luggage compartment trough (8) of the vehicle body structure via bolting means (10).

8. Deformation element according to one of the preceding claims, **characterized in that** a bottom surface (21) of the bearing surface (22) of the luggage compartment trough (8), which bottom surface is formed by all of the profile supports (4, 5, 6), is adapted in such a manner that a front, lower region of the profile support (4) has an initially bevelled and adjoining rounded bearing surface (23) which peters out in a front end edge (24) of the profile support (4).

9. Deformation element according to one of the preceding claims, **characterized in that** the two profile supports (5, 6) converge to the rear - as seen in the direction of travel (F) of the vehicle - from the front transversely running profile support (4) and are positioned with the front profile support (4) between them, with an angle (α) being formed, and form a triangular empty space (L).

## Revendications

1. Elément déformable pour un véhicule automobile, qui est disposé dans un volume de coffre d'une structure de la carrosserie du véhicule dans la partie avant ou arrière du véhicule, **caractérisé en ce que** l'élément déformable (3) se compose d'un composant continu de forme triangulaire avec un support profilé avant (4) orienté transversalement au véhicule - vu dans la direction de conduite (F) du véhicule - auquel se raccordent des supports profilés supplémentaires (5, 6) s'étendant vers l'arrière - par rapport à la direction de conduite (F) du véhicule - dont les extrémités arrière libres (E1, E2) sont connectées l'une à l'autre par le biais d'une plaque de support (15) s'étendant transversalement, qui s'appuie sur la structure de la carrosserie.

2. Elément déformable selon la revendication 1, **caractérisé en ce qu'**un support profilé (5, 6) s'étendant obliquement vers l'arrière est fixé aux extrémités frontales (E3, E4) du support profilé avant (4), et une surface de paroi interne (12, 13) du support profilé (5, 6) s'applique à l'extrémité frontale (E3, E4) du support profilé (4) et les extrémités frontales avant (E5, E6) du support profilé (5, 6) sont exposées.

3. Elément déformable selon les revendications 1 ou 2, **caractérisé en ce que** le support profilé avant (4) présente au moins deux chambres creuses (4a, 4b) s'étendant dans la direction longitudinale (A-A) du support profilé et séparées par une paroi formant nervure interne (20), qui sont réalisées avec une section transversale en forme de carré.

4. Elément déformable selon les revendications 1 ou 2, **caractérisé en ce que** les supports profilés (5, 6) s'étendant obliquement vers l'arrière présentent à chaque fois au moins trois chambres creuses (5a, 5b, 5c) ou (6a, 6b, 6c) s'étendant dans la direction longitudinale (B-B) du support profilé et séparées par deux parois formant nervure internes (S1) et (S2), qui sont réalisées avec une section transversale en forme de carré.

5. Elément déformable selon les revendications 1, 2, 3 ou 4, **caractérisé en ce que** la plaque de support de terminaison (15) comprend un profilé de support (15a) saillant hors du plan de la plaque, qui est encastré avec support dans une formation (25) d'une paroi transversale ou d'un profilé transversal (16) de la structure de la carrosserie du véhicule.

6. Elément déformable selon l'une quelconque des revendications précédentes, **caractérisé en ce que** la plaque de support de terminaison (15) vient en prise au moyen de branches (26, 27) avec les côtés frontaux des supports profilés (5, 6).

7. Elément déformable selon l'une quelconque des revendications précédentes, **caractérisé en ce que** les supports profilés (4, 5 et 6) de l'élément déformable (3) présentent, sur au moins un côté, des épaulements (30, 31, 32) pour la fixation par le biais de moyens vissables (10) au fond du volume du coffre (8) de la structure de carrosserie du véhicule.

8. Elément déformable selon l'une quelconque des revendications précédentes, **caractérisé en ce qu'**une surface inférieure (21) de la surface d'appui (22), formée par tous les supports profilés (4, 5, 6), est adaptée au volume du coffre (8) de telle sorte qu'une région inférieure avant du support profilé (4) présente une surface d'appui (23) biseautée arrondie s'y raccordant, qui se termine par une arête frontale avant (24) du support profilé (4).

9. Elément déformable selon' l'une quelconque des revendications précédentes, **caractérisé en ce que** les deux supports profilés (5, 6) convergent depuis le support profilé (4) avant s'étendant transversalement vers l'arrière - vu dans la direction de conduite (F) du véhicule - et sont inclinés entre eux en formant avec le support profilé avant (4) un angle (α) et forment un espace vide triangulaire (L).
